# EUROPEAN PATENT SPECIFICATION

(11) **EP 3 083 496 B1**
(45) Date of publication and mention of the grant of the patent: **09.10.2024**
(21) Application number: 14835704.9
(22) Date of filing: 17.12.2014
(51) Int. Cl.: C01B 32/28, C09K 5/14

(54) **ZETA POSITIVE AMINO-FUNCTIONALIZED NANODIAMOND DISPERSION**
ZETA-POSITIVE AMINOFUNKTIONALISIERTE NANODIAMANTENDISPERSION
DISPERSION DE NANODIAMANT À FONCTION AMINO À POTENTIEL ZÊTA POSITIF

(30) Priority: 19.12.2013 FI 20136297
(43) Date of publication of application: 26.10.2016
(73) Proprietor: Carbodeon Ltd Oy, 00120 Helsinki (FI)
(72) Inventor: MYLLYMÄKI, Vesa, 00210 Helsinki (FI)
(74) Representative: Berggren Oy
(86) International application number: PCT/FI2014/051018
(87) International publication number: WO 2015/092142

(56) References cited:
- WO-A1-2012/158380
- S A DENISOV ET AL: "Effects of amination and adsorption of ammonia on the electrical conductivity of the detonation nanodiamond powders", IOP CONFERENCE SERIES: MATERIALS SCIENCE AND ENGINEERING, vol. 16, 1 November 2010 (2010-11-01), pages 012005, XP055182632, DOI: 10.1088/1757-899X/16/1/012005
- DATABASE WPI Week 200904, Derwent World Patents Index; AN 2009-A85216, XP002738491
- DATABASE WPI Week 200775, Derwent World Patents Index; AN 2007-801333, XP002738492
- M. OZAWA ET AL: "Preparation and Behavior of Brownish, Clear Nanodiamond Colloids", ADVANCED MATERIALS, vol. 19, no. 9, 7 May 2007 (2007-05-07), pages 1201 - 1206, XP055133796, ISSN: 0935-9648, DOI: 10.1002/adma.200601452

## Description

The present invention relates to zeta positive amino functionalized detonation nanodiamond dispersion.

### Background

Nanodiamond (ND) also referred to as ultrananocrystalline diamond or ultradis-persed diamond (UDD) is a unique nanomaterial which can easily be produced in hundreds of kilograms by detonation synthesis.

Detonation nanodiamonds (ND) were first synthesized by researchers from the USSR in 1963 by explosive decomposition of high-explosive mixtures with negative oxygen balance in a non-oxidizing medium. A typical explosive mixture is a mixture of trinitrotoluene (TNT) and hexogen (RDX) and a preferred weight ratio of TNT/RDX is 40/60.

As a result of the detonation synthesis, diamond-bearing soot also referred to as detonation blend is obtained. This blend comprises nanodiamond particles, which typically have an average particle size of about 2 to 8 nm, and different kinds of non-diamond carbon contaminated by metals and metal oxide particles coming from the material of the detonation chamber and used explosives. The content of nanodiamonds in the detonation blend is typically between 30 and 75% by weight.

The nanodiamond-containing blends obtained from the detonation contain same hard agglomerates, typically having a diameter of above 1 mm. Such agglomerates are difficult to break. Additionally the particle size distribution of the blend is very broad, ranging typically from several to tens of microns.

The diamond carbon comprises sp3 carbon and the non-diamond carbon mainly comprises sp2 carbon species, for example carbon onion, carbon fullerene shell, amorphous carbon, graphitic carbon or any combination thereof.

There are number of processes for the purification of the detonation blends. The purification stage is considered to be the most complicated and expensive stage in the production of nanodiamonds.

For isolating the end diamond-bearing product, a complex of chemical operations directed at either dissolving or gasifying the impurities present in the material are used. The impurities, as a rule, are of two kinds: non-carbon (metal oxides, salts etc.) and nondiamond forms of carbon (graphite, black, amorphous carbon).

Chemical purification techniques are based on the different stability of the diamond and non-diamond forms of carbon to oxidants. Liquid-phase oxidants offer an advantage over gas or solid systems, because they allow one to obtain higher reactant concentrations in the reaction zone and, therefore, provide high reaction rates.

In the recent years detonation nanodiamonds have received more and more attention due to several existing applications within electroplating (both electrolytic and electroless), polishing, various polymer mechanical and thermal composites, CVD-seeding, oils and lubricants additives as well as possible new applications such as luminescence imaging, drug delivery, quantum engineering etc. Their usability is based on the fact that the outer surface of detonation nanodiamond, as opposite to for example nanodiamonds derived from micron diamonds by crushing and sieving, is covered with various surface functions.

The fact that the available detonation nanodiamond materials possess a variety of various surface functions and thus agglomeration (from several hundreds of nanometers to several microns), is effectively limiting their use in industrial applications. As applying agglomerating nanodiamond grades, very high filler loadings are typically required, making their cost efficient use impossible in most of the applications today. Moreover, nanodiamond agglomeration is effectively limiting or prohibiting the optimization of various application end product technical properties. Agglomeration is making it impossible to use nanodiamonds in applications wherein the product optical properties have to be retained; agglomeration is causing scratching in polishing and fine-polishing applications; agglomeration can have a direct adverse effect on polymer composite mechanical properties; agglomeration in an electroplating electrolyte or electroless deposition chemicals (due to non-optimal nanodiamond zeta potential as in relation to electrolyte pH regime) makes their usage impossible or economically ineffective for manufacturing mechanically improved metal coatings; agglomeration is effectively prohibiting nanodiamond usage as a drug carrier material; agglomeration is having an adverse effect on CVD produced diamond film quality etc.

Cost efficient and technologically optimized usage of nanodiamond materials both in their powder, suspension and dispersion form can only be achieved if nanodiamonds are substantially mono-functionalized type and have thus, depending on the type of surface modification, the highest possible affinity to various solvents and polymer, metal or ceramic materials. Such a substantially mono-functionalized nanodiamond possesses, depending on the type of surface functionalization, either a highly positive or negative zeta potential value.

The significance of zeta potential is that its value can be related to the stability of colloidal dispersions. The zeta potential indicates the degree of repulsion between adjacent, similarly charged particles in dispersion or suspension. For molecules and particles that are small enough, a high zeta potential will confer stability, i.e., the solution or dispersion will resist aggregation. When the potential is low, attraction exceeds repulsion and the dispersion will break and flocculate. So, colloids with high zeta potential (negative or positive) are electrically stabilized while colloids with low zeta potentials tend to coagulate or flocculate. If the zeta potential is 0 to ±5 mV, the colloid is subjected to rapid coagulation or flocculation. Zeta potential values ranging from ±10 mV to ±30 mV indicate incipient instability of the colloid (dispersion), values ranging from ±30 mV to ±40 mV indicate moderate stability, values ranging from ±40 mV to ±60 mV good stability as excellent stability is reached only with zeta potentials more than ±60 mV.

Several methods for functionalizing the nanodiamonds with different functional groups have been developed. Typical functionalized nanodiamonds are hydrogenated nanodiamonds, carboxylated nanodiamonds, hydroxylated nanodiamonds and amino-functionalized nanodiamonds, but contain still a mixture of typically oppositely charged functions and thus, mediocre zeta potential values and are thus not available in their solvent dispersion forms.

Several methods for producing amino functionalized (nano)diamonds are known.

Publication A. Krueger and D. Lang, Adv. Funct. Mater. 2012, 22, 890-906 discusses possible methods for direct amination of the nanodiamond surface. Krueger et al admit there are no successful examples on direct grafting of amino groups onto the surface of true nanodiamond.

Publication K.I. Sotowa, T. Amamoto, A. Sobana, K. Kusakabe, T. Imato, Diamond Relat. Mater. 2004, 13, 145-150 discusses the formation of NH2 groups on the diamond surface by reacting chlorinated (manufactured from hydrogenated diamond particles) diamond with gaseous ammonia at elevated temperatures on sub-micron (0.5 micron) diamond particles. Such large diamond particle properties differentiate strongly from those of detonation nanodiamond particles.

The publication A. Krueger and D. Lang, Adv. Funct. Mater. 2012, 22, 890-906 discusses also methods for establishing the amino functions somewhat more far away from the diamond surface. The methods include the use of aminated silanes, the grafting of aromatic moieties and formation of aminomethyl groups.

Publication V.N. Mochalin, I. Neitzel, B.J.M. Etzold, A. Peterson, G. Palmese and Y. Gogotsi, ACS Nano, Vol. 5, No.9, 7494-7502, 2011 represents preparation of aminated nanodiamond by linking ethylenediamine into carboxylated nanodiamond surface. Also herein, the amino function is not grafted directly to nanodiamond surface but is located at the edge of a lengthy chain structure. As produced amino-functionalized nanodiamond zeta potential is at highest + 27.5 mV, also the degree of amino-functionalization remains remarkably low.

WO 2011/041714 A1 discloses a method for manufacture surface functionalized nanodiamonds with free amines. In the method carboxylic groups on surface of chemically active nanodiamonds are reacted with (i) an activating agent or with (ii) a chlorinating agent in an inert solvent. The material is then reacted with a bisamine in an inert solvent. The bisamine may have both amine groups in unprotected form, in which case the reaction yields an immobilized amide with a free amino group. Alternatively, the bisamine may have one unprotected amino group and one protected amino group. In this case the reaction yields an immobilized amide with a protected amino group. The protective group may be removed using any well known conditions yielding surface functionalized nanodiamonds with amides containing free amines.

US 2005/0158549 A1 discloses a method for producing amino-nanodiamond derivative from fluorinated nanodiamonds. Fluorinated nanodiamond is refluxed in anhydrous ethylenediamine in the presence of pyridine at about 130°C for 24 hours under a nitrogen atmosphere. After cooling the mixture down to room temperature, the final product is filtered, washed with water and ethanol, and dried in vacuum oven at 70°C overnight yielding a dark-brown powder of amino-nanodiamond derivative.

Denisov S A et al. (IOP Conference series: Materials science and engineering, vol. 16, 1 November 2010) discloses a method for producing zeta positive amino functionalized detonation nanodiamond powder comprising first treating nanodiamonds with CCI₄ in Argon gas and then heating particles under a gas atmosphere comprising ammonia gas.

JP 2008 303104 discloses a method for producing zeta positive amino functionalized detonation nanodiamond powder comprising heating hydrogenated nanodiamond particles under a gas atmosphere comprising ammonia gas and nitrogen.

JP 2007 238411 A discloses a method for producing zeta positive amino functionalized detonation nanodiamond powder comprising heating hydrogenated nanodiamond particles under a gas atmosphere comprising ammonia gas and nitrogen.

A beads assisted sonic treatment for breaking up nanodiamond aggregates is disclosed in WO 2012/158380 A1 and Ozawa M et al. (Advanced materials, vol. 19, no. 9, 7 May 2007, pp.1201-1206).

As optimizing electrostatic interaction between nanodiamond particle and other materials, both organic, inorganic and metals, it is very important to use nanodiamonds surface functionalized quantitatively or predominantly with only one kind of surface functions. The homogeneity of surface functionalization is creating the strongest possible interaction or even covalent bonding (as in case with epoxides) with the targeted material such as polymers, ceramic materials and metals. Moreover, the homogeneous surface functionalization is making the detonation nanodiamond particle agglomeration weaker, making it easier to disperse into both solid and liquid matrixes.

Based on above disclosure, there is still a qualitative and quantitative need for efficient methods for producing zeta positive amino-functionalized nanodiamond powder and highly zeta positive amino-functionalized nanodiamond dispersions.

### Summary

The present invention relates to zeta positive amino-functionalized detonation nanodiamond dispersion comprising zeta positive amino-functionalized detonation nanodiamond particles and a liquid medium, wherein pH of the zeta positive amino-functionalized detonation nanodiamond dispersion is at least preferably at least 9.0 as measured at nanodiamond concentration of 5 wt.%, and wherein the zeta positive amino-functionalized nanodiamond particle concentration in the dispersion is at least 0.2 wt.% and wherein zeta potential of the zeta positive amino-functionalized detonation nanodiamond dispersion is over +30 mV measured at pH-range 2 to 12, wherein zeta potential value is measured of samples diluted to 0.1 wt-%..

It has now been surprisingly found that by heating nanodiamond particles at substantially ambient pressure under a gas atmosphere comprising ammonia gas highly zeta positive amino-functionalized nanodiamond powder can be produced. As the process is conducted without using pressurized conditions, the method of the present disclosure is safer, scalable and more economic compared to those methods where pressurized conditions are required.

It was also surprisingly found that by using one or more inert gases with ammonia gas in the gas atmosphere, smaller concentration of ammonia gas is needed to produce the highly zeta positive amino-functionalized nanodiamond powder. Ammonia gas concentration from 1 to 10% is sufficient for the method of the present disclosure. As the ammonia gas concentration is low, the process itself is safer and more cost effective.

It was also surprisingly found that by further treating the zeta positive amino-functionalized nanodiamond powder produced with the method of the present disclosure highly zeta positive amino-functionalized nanodiamond dispersions can be produced. The produced zeta positive amino-functionalized nanodiamond powder can be dispersed into several liquid mediums to obtain highly zeta positive amino-functionalized nanodiamond dispersions.

### Brief description of figures

Figure 1 shows sample (samples A, B, C and D) positions and gas flow direction in a furnace.
Figure 2 shows the temperature plot for nanodiamond amino-functionalization process conducted at 700°C and 800°C for 6 hours time
Figure 3 shows untreated commercially available Molto Nuevo nanodiamond samples on the left side, and amino-functionalized nanodiamond samples prepared at 800°C on the right hand side.
Figure 4 shows particle size distribution of amino-functionalized nanodiamond dispersion after beads assisted sonic disintegration process (BASD). The amino-functionalized nanodiamond powder has been prepared from commercially available Molto Nuevo powder at 700°C, in neat ammonia gas flow.
Figure 5 shows the temperature plot as conducting the amino-functionalization at 700°C for 6 hours time. Distance between measurement points is (14 channels) 10 cm.
Figure 6 shows zeta potential of amino-functionalized nanodiamond dispersion after beads assisted sonic disintegration process (BASD) . The amino-functionalized nanodiamond powder has been prepared from commercially available Molto Nuevo powder at 700°C, in neat ammonia gas flow.
Figure 7 shows the particle size distribution of amino-functionalized nanodiamond dispersion after beads assisted sonic disintegration process (BASD. The amino-functionalized nanodiamond powder has been prepared from commercially available Molto Nuevo powder at 600°C, in neat ammonia gas flow.
Figure 8 shows the particle size distribution of amino-functionalized nanodiamond dispersion after beads assisted sonic disintegration process (BASD).
Figure 9 shows the particle size distribution of amino-functionalized nanodiamond dispersion after beads assisted sonic disintegration process (BASD) .
Figure 10 shows the particle size distribution of amino-functionalized nanodiamond dispersion after beads assisted sonic disintegration process (BASD.

### Detailed description

By term "zeta positive nanodiamond" is meant a nanodiamond particle having a positive zeta potential.

By term "amino-functionalized nanodiamond" is meant a nanodiamond particle having amino functions on its surface.

By term "zeta positive amino-functionalized nanodiamond" is meant a nanodiamond particle having amino functions on its surface and having a positive zeta potential.

By term "zeta positive amino-functionalized nanodiamond dispersion" is meant a dispersion of liquid medium(s) and nanodiamond particles where the nanodiamond particles are substantially present in their primary particle form and having amino functions on theirs surface, and the dispersion having a positive zeta potential.

By particle size distribution D10 is meant that 10% of the particles are smaller than given particle size, and 90% of particles are larger than given particle size.

By particle size distribution D50 is meant that 50% of the particles are smaller than given particle size, and 50% of particles are larger than given particle size.

By particle size distribution D90 is meant that 90% of the particles are smaller than given particle size, and 10% of particles are larger than given particle size.

Zeta potentials referred in this description relate to zeta potentials measured in aqueous suspensions or dispersions.

The present disclosure provides a method for producing zeta positive amino-functionalized detonation nanodiamond powder, more particularly a method for producing zeta positive amino-functionalized nanodiamond powder comprising heating nanodiamond particles under a gas atmosphere at a pressure ranging from 5 mbar to 2 bar, wherein the gas atmosphere comprises ammonia gas.

The nanodiamonds are detonation nanodiamonds. That is, the nanodiamonds are produced by the detonation method. In other words, the nanodiamonds originates from detonation synthesis.

The precursor nanodiamond particles for producing the zeta positive amino-functionalized nanodiamond powder may be essentially pure nanodiamond particles, preferably having a nanodiamond content of at least 87% by weight, more preferably at least 97% by weight. The nanodiamond particles may contain graphite and amorphous carbon originating from the production of the nanodiamonds. They may also contain some residual metal impurities, either as metals, metal salts or in metal oxide form. The nanodiamond particles used as precursors for the amino-functionalized nanodiamonds are commercially available.

The detonation blend contained nanodiamonds exhibit a variety of various surface functional groups, including amino-functions.

Preferably, the precursor nanodiamond particles are particles that have been produced from detonation blend by using an oxidant saving as high degree of already contained amino functional groups on nanodiamond particle surface. Said amino-groups bound covalently directly to nanodiamond surface. One especially suitable oxidant for nanodiamond blend oxidation is nitric acid. Another example of a suitable oxidant for nanodiamond blend oxidation is KMnO₄.

Preferably the nanodiamond particles are nanodiamond particles that have been subjected to a pretreatment where at least part of acidic, oxygen bearing surface functions have been removed from the surface of the nanodiamond particles. The acid value of said nanodiamond particles is preferably less than 3.0. The acid value can be determined by titration, as explained later in this description.

The removal of the acidic, oxygen bearing surface functions can be performed by treating the nanodiamond particles with continuous argon gas or with continuous argon and hydrogen gas flow at elevated temperature such as 400-950 °C. Preferably the removal is performed with continuous argon gas flow at elevated temperature.

Nanodiamond particles from which at least part of the acidic, oxygen bearing surface functions have been removed are commercially available.

In the method of the present disclosure for amino-functionalizing the nanodiamond powder, the gas atmosphere comprises ammonia gas. In order to avoid interferences during the heating process of the nanodiamond particles under the gas atmosphere by foreign substances preferably ammonia gas is used with purity of at least 99.9%, more preferably at least, 99.999%. The ammonia gas may be cleaned prior to introduction into a reaction chamber, for example, by via a palladium membrane. Ammonia gas may be fed periodically or continuously into the reaction chamber. Ammonia gas is commercially available.

The gas atmosphere may contain substantially only ammonia gas, preferably only ammonia gas preferably with purity of at least 99.9%.

The gas atmosphere may comprise additionally one or more inert gases. The inert gas can be any gas that is not chemically reactive. That is, the inert gas can be any gas that is not chemically reactive in the method disclosed. Preferably the inert gas is selected from the group consisting of argon, nitrogen, helium, or a mixture thereof. Most preferably the inert gas is argon.

Preferably the heating of the nanodiamond particles under the gas atmosphere occurs in a reaction chamber with ammonia gas and one or more inert gases being continuously guided through the reaction chamber during the heating. Ammonia gas and one or more inert gases are guided continuously, as a mixture, through the reaction chamber with flow rate from 0.01 to 20 slpm (standard liter per minute), preferably from 0.1 to 15 slpm, and more preferably from 0.1 to 10 slpm.

Ammonia gas content in the gas mixture guided through a reaction chamber is 1-10 %, preferably 2-8%, and more preferably 3-7%. The ammonia gas content relates to ammonia content in reactive gas flow. The percentage relates here to the percentage of particles.

The reaction chamber may be any suitable reactor, known by a skilled person, which can be used according to the disclosure. The reaction chamber may be for example a suitable furnace.

The heating of the nanodiamond particles under the gas atmosphere comprising ammonia gas occurs substantially at ambient pressure. The heating may occur at a pressure ranging from 5 mbar to 20 bar, preferably from 5 mbar to 2 bar.

The nanodiamond particles are heated under the gas atmosphere comprising ammonia gas from 1 to 15 hours, preferably from 2 to 10 hours, and more preferably from 3 to 9 hours.

The nanodiamond particles are heated under the gas atmosphere comprising ammonia gas at a temperature from 300 to 1000 °C, preferably from 400 to 900 °C, and more preferably from 400 to 850 °C.

The zeta positive amino-functionalized nanodiamond powder obtained by the heating the nanodiamond particles under the gas atmosphere comprising ammonia gas are initially in agglomerated powder form. If the agglomerated powder is subjected to one hour ultrasonic treatment, for example with Hielscher 400 W ultrasonic device, in water, average particle size distribution (D50) of the zeta positive hydrogenated nanodiamond particles in the agglomerated form is from 2 nm to 400 nm, preferably from 2 nm to 200 nm. For conducting said particle size distribution measurement, reliable and reproducible results can be received with nanodiamond concentrations varying between 0.1 to 1.5 wt-%.

As suspended into water, zeta potential of the obtained zeta positive amino-functionalized nanodiamond particles is over +30 mV, preferably over +35 mV, more preferably over +40 mV, and most preferably over +50 mV, measured at pH higher than 7.

As suspended into water, zeta potential of the obtained zeta positive amino-functionalized nanodiamond particles is over +30 mV at a pH-range from 0.5 to 14, preferably at a pH-range from 1 to 13, and more preferably at a pH-range from 2 to 12.

As suspended into water, pH of the obtained 5 wt.% zeta positive amino-functionalized nanodiamond suspension is at least 8.0, preferably over 8.5, more preferably over 9.0, and most preferably at least 10. The pH is measured from suspension comprising substantially only the zeta positive amino-functionalized nanodiamond and water. That is, the suspension does not contain any additives that affects to the pH.

Base value of the zeta positive amino-functionalized nanodiamond particles as measured with titration is over 10, preferably over 15 and most preferably over 18.

Determination of above base value/functions is conducted in the following way: Solid samples are weighted (1.5 g). The samples are dispersed into 100 ml of acetic acid using Hielscher 400 W ultrasonic unit. The samples are titrated with 0.1 M perchloric acid (in acetic acid), using methyl violet as an indicator. 100 ml of acetic acid is used as a reference sample. The titration end point is featured with the indicator and/or with potentiometric means using Metrohm Solvotrode electrode and drawing a titration curve.

Acidic value of the zeta positive amino-functionalized nanodiamond particles as measured with titration is less than 3, preferably less than 2 and most preferably less than 1.5.

Determination of above acid value/functions is conducted in following way: Solid samples are weighted (1.5 g). The samples are dispersed into 75 ml of neutralized ethanol (water content 0.5 wt.%), using Hielscher 400 W ultrasonic unit. The prepared samples are titrated with 0.1 M KOH (in methanol), using phenoliftalene as an indicator. The samples are treated continuously with Argon gas flow during the titration. The titration end point is detected by using an indicator and with potentiometric means, using Methrohm Solvotrode electrode and drawing a titration curve.

Introduced new amino-functions are preferably directly bound to nanodiamond surface.

The produced zeta positive amino-functionalized nanodiamond particle surface may contain nitrogen from 500 to 5000 mg/kg, preferably from 1000 to 3000 mg/kg, more preferably from 1400 to 2400 mg/kg. The measurement is conducted by Kjeldahl method. The measurement is calculated from sample dry weight.

Also a method for producing zeta positive amino-functionalized nanodiamond dispersions is provided in the disclosure.

More particularly, there is provided a method for producing zeta positive amino-functionalized nanodiamond dispersion comprising
i) heating nanodiamond particles under a gas atmosphere at a pressure ranging from 5 mbar to 2 bar for producing zeta positive amino-functionalized detonation nanodiamond powder, wherein the gas atmosphere comprises ammonia gas;
ii) suspending the zeta positive amino-functionalized nanodiamond powder into a liquid medium; and
iii) subjecting the zeta positive amino-functionalized nanodiamond suspension to beads assisted sonic disintergration (BASD) process.

In step i) nanodiamond particles are heated under a gas atmosphere at substantially ambient pressure for producing zeta positive amino-functionalized nanodiamond powder, wherein the gas atmosphere comprises ammonia gas.

The nanodiamonds are detonation nanodiamonds. That is, the nanodiamonds are produced by the detonation method. In other words, the nanodiamonds originates from detonation synthesis.

The precursor nanodiamond particles may be essentially pure nanodiamond particles, preferably having a nanodiamond content of at least 87% by weight, more preferably at least 97% by weight. The nanodiamond particles may contain graphite and amorphous carbon originating from the production of the nanodiamonds. They may also contain some residual metal impurities, either as metals, metal salts or in metal oxide form. The nanodiamond particles used as precursors for the amino-functionalized nanodiamonds are commercially available.

Preferably the nanodiamond particles are nanodiamond particles that have been subjected to a pretreatment where at least part of acidic, oxygen bearing surface functions have been removed from the surface of the nanodiamond particles.

The removal of the acidic, oxygen bearing surface functions can be performed by treating the nanodiamond particles with continuous argon gas or with continuous argon and hydrogen gas flow at elevated temperature such as 600-800 °C. Preferably the removal is performed with continuous argon gas flow at elevated temperature.

Nanodiamond particles from which at least part of the acidic, oxygen bearing surface functions have been removed are commercially available.

In the method of the present disclosure for amino-functionalizing the nanodiamond powder, the gas atmosphere comprises ammonia gas. In order to avoid interferences during the heating process of the nanodiamond particles under the gas atmosphere by foreign substances preferably ammonia gas is used with purity of at least 99.9%, more preferably at least, 99.999%. The ammonia gas may be cleaned prior to introduction into the reaction chamber, for example, by via a palladium membrane. Ammonia gas may be fed periodically or continuously into the reaction chamber. Ammonia gas is commercially available.

The gas atmosphere may contain substantially only ammonia gas, preferably only ammonia gas preferably with purity of at least 99.9%.

The gas atmosphere may comprise additionally one or more inert gases. The inert gas can be any gas that is not chemically reactive. That is, the inert gas can be any gas that is not chemically reactive in the method of the present disclosure. Preferably the inert gas is selected from the group consisting of argon, nitrogen, helium, or a mixture thereof. Most preferably the inert gas is argon.

Preferably the heating of the nanodiamond particles under the gas atmosphere occurs in a reaction chamber with ammonia gas and one or more inert gases being continuously guided through the reaction chamber during the heating.

Ammonia gas and one or more inert gases are guided continuously, as a mixture, through the reaction chamber with flow rate from 0.01 to 50 slpm (standard liter per minute), preferably from 0.1 to 15 slpm, and more preferably from 0.1 to 10 slpm.

Ammonia gas content in the gas mixture guided through a reaction chamber is 1-10%, preferably 2-8%, and more preferably 3-7%. The ammonia gas content relates to ammonia content in reactive gas flow. The percentage relates here to the percentage of particles.

The reaction chamber may be any suitable reactor, known by a skilled personwhich can be used according to the disclosure. The reaction chamber may be for example a suitable furnace.

The heating of the nanodiamond particles under the gas atmosphere comprising ammonia gas occurs substantially at ambient pressure. In one embodiment the heating occurs at a pressure ranging from 5 mbar to 20 bar, preferably from 5 mbar to 2 bar.

The nanodiamond particles are heated under the gas atmosphere comprising ammonia gas from 1 to 15 hours, preferably from 2 to 10 hours, and more preferably from 3 to 9 hours.

The nanodiamond particles are heated under the gas atmosphere comprising ammonia gas at a temperature from 300 to 1000°C, preferably from 400 to 900°C, and more preferably from 400 to 850°C.

The zeta positive amino-functionalized nanodiamond powder obtained by the heating the nanodiamond particles under the gas atmosphere are initially in agglomerated powder form.

Base value of the zeta positive amino-functionalized nanodiamond particles as measured with titration is over 10, preferably over 15 and most preferably over 18.

Acidic value of the zeta positive amino-functionalized nanodiamond particles as measured with titration is less than 3, preferably less than 2 and most preferably less than 1.5.

Introduced new amino-functions are preferably directly bound to nanodiamond surface.

In step ii) the obtained zeta positive amino-functionalized nanodiamond powder is suspended into a liquid medium.

Any known suitable methods and devices may be used for suspending the zeta positive amino-functionalized nanodiamond powder into a liquid medium. Examples of such methods are magnetic stirring, ultrasound, combined magnetic stirring and ultrasound treatment, magnetic stirring followed by ultrasound treatment, or magnetic stirring followed by ultrasound treatment followed by magnetic stirring.

The suspension pH can be adjusted by using a suitable acid or base.

The zeta positive amino-functionalized nanodiamond particles may be in the suspension in agglomerated form, or as a mixture of agglomerated and dispersed form. Particle size distribution of the agglomerated suspension form is between 2 nm to 400 nm, preferably between 2 nm and 200 nm.

The liquid medium may be any suitable liquid medium. The liquid medium is preferably selected from the group consisting of polar protic solvents, polar aprotic solvents, dipolar aprotic solvents, aromatic solvents, chlorinated solvents, ionic liquids, or a mixture of any said mediums.

Preferred polar protic solvents are water; alcohols such as methanol, ethanol, iso-propanol, butanol, linear aliphatic diols such as ethylene glycol, 1,3-propanediol, 1,4-butanediol, 1,5-pentanediol, 1,8-octanediol; branched diols such as 1,2-propanediol, 1,3-butanediol, 2,3-butanediol, 1,3-butanediol, 1,2-pentanediol, etohexadiol, p-menthane-3,8-diol, 2-methyl-2,4-pentanediol; and carboxylic acids such as formic acid and acetic acid.

Preferred polar aprotic solvents are tetrahydrofuran, propylene carbonate and lactams such as N-methyl-2-pyrrolidone (NMP) and N-ethyl-2-pyrrolidone (NEP).

Preferred dipolar aprotic solvents are ketones such as acetone and methyl ethyl ketone (MEK), propylene glycol monomethyl ester acetone (PGMEA); esters such as methyl acetate, ethyl acetate, lactones such as gammabutyrolactone (GBL); N,N-methylformamide and dimethyl sulfoxide (DMSO).

Preferred aromatic solvents are toluene, xylenes and benzene.

Preferred chlorinated solvents are dichloromethane, trichloroethylene and chloroform.

Preferred ionic liquids are 1-ethyl-3-methylmidazolium chloride, 1-butyl-3-meth-ylmidazolium chloride, 1-ethyl-3-methyl-imidazolium ethylsulfate, 1-ethyl-3-methyl imidazolium diethylphosphate, 1-ethyl-3-methyl-imidazolium dicyanamide, Tris-(2-hydroxyethyl)-methylammonium methylsulfate, 1-ethyl-3-methyl-imidazolium thiocyanate, 1-ethyl-3-methyl-imidazolium tetrafluoroborate, 1-ethyl-3-methyl-imidazolium trifluoromethanesulfonate, 1-ethyl-3-methyl-imidazolium bis (trifluoromethanesulfonyl)imide, 1-ethyl-3-methyl-imidazolium methylcarbonate and 1-butyl-3-methyl-imidazolium methylcarbonate, The most preferred ionic liquids are 1-ethyl-3-methylmidazolium chloride and 1-butyl-3-methylmidazolium chloride.

More preferably the liquid medium is selected from the group consisting of water, methanol, ethanol, iso-propanol, linear aliphatic diols, branched diols, N-methyl-2-pyrrolidone (NMP), N-ethyl-2-pyrrolidone (NEP) and dimethyl sulfoxide (DMSO), or a mixture of any said solvents.

Most preferably the liquid medium is water. The water may be deionized.

The zeta positive amino-functionalized nanodiamond powder can be suspended directly into water or other liquid mediums. Alternatively, the zeta positive amino-functionalized nanodiamond powder can be first suspended into water, then mixing another liquid medium having boiling point above water and at least partly soluble in water with the aqueous zeta positive amino-functionalized nanodiamond suspension, and then distilling the water out, giving zeta positive amino-functionalized nanodiamond particles suspended in the liquid medium other than water.

In step iii), the zeta positive amino-functionalized nanodiamond suspension is subjected to beads assisted sonic disintergration (BASD) process for obtaining the zeta positive amino-functionalized nanodiamond dispersion.

The BASD process means combined beads milling and ultrasonication processes. That is, the zeta positive amino-functionalized nanodiamond suspension is simultaneously beads milled and treated with ultrasonication. The beads mill devices and the ultrasonic devices, and the BASD process are known for a skilled person. The beads assisted sonic disintergration process can be operated with pass or re-circulation method. In the pass method the material is fed to the apparatus at one end and discharged at the other end. In the re-circulation method the material circulates in the system until required particle size is obtained. The smaller the grinding media particles are, the smaller is the particle size of the final product. A grinding chamber of the apparatus can also be filled with an inert shield gas, such as nitrogen, that does not react with the material being ground, to prevent oxidation or explosive reactions that could occur with ambient air inside the mill. The ultrasonication can be kept on during the whole milling or switched off at any stage, and optionally switched on again. The BASD process is run until a suitable particle size is obtained. The apparatuses for the beads assisted sonic disintergration are commercially available. The suspension pH can be adjusted before, during or after the BASD process, by using a suitable acid or base.

The obtained zeta positive amino-functionalized nanodiamond particles in the dispersion are substantially in dispersed form. D50 value of said amino-functionalized nanodiamond dispersion is preferably less than 30 nm, and more preferably less than 15 nm.

After the BASD process, obtained aqueous zeta positive amino-functionalized nanodiamond dispersion may be further treated. Liquid medium other than water having boiling point above water and at least partly soluble in water is mixed with the aqueous zeta positive amino-functionalized nanodiamond dispersion, following distillation of water, giving zeta positive amino-functionalized nanodiamond particles dispersed in the liquid medium other than water.

Zeta potential of the zeta positive amino-functionalized nanodiamond dispersion is over +35 mV, preferably over +40 mV, and most preferably over +50 mV measured at pH higher than 7.

Zeta potential of the zeta positive amino-functionalized nanodiamond dispersion is over +40 mV, preferably over +50 mV measured at pH lower than or 7.

The zeta positive amino-functionalized nanodiamond dispersion is stable when the zeta potential is over +35 mV measured at pH higher than 7.

D90 average particle size distribution of the zeta positive amino-functionalized nanodiamond dispersion is from 2 nm to 70 nm, preferably from 2 nm to 50 nm, more preferably from 2 to 30 nm, and most preferably from 3 nm to 12 nm.

The zeta positive amino-functionalized nanodiamond particle concentration in the dispersion is at least 0.2 wt.%, preferably between 0.2 and 10 wt.%, and more preferably between 0.5 and 8 wt.%.

Preferably the pH of the zeta positive amino-functionalized nanodiamond dispersion is at least 8, preferably at least 8.5, more preferably at least 9.0 and most preferably at least 10.0 as measured at 5 wt.% nanodiamond concentration. The pH is measured from dispersion comprising substantially only the zeta positive amino-functionalized nanodiamond and the liquid medium. That is, the dispersion does not contain any additives that affects to the pH.

The present disclosure provides also zeta positive amino-functionalized detonation nanodiamond powder, more particularly zeta positive amino-functionalized detonation nanodiamond powder comprising zeta positive amino-functionalized detonation nanodiamond particles, wherein pH of the zeta positive amino-functionalized nanodiamond suspended in water is at least 8.0 as measured at nanodiamond concentration of 5 wt.%.

Preferably the pH of the zeta positive amino-functionalized nanodiamond suspended in water is at least 8.5, more preferably at least 9.0 and most preferably at least 10.0 as measured at 5 wt.% nanodiamond concentration. The pH is measured from suspension comprising substantially only the zeta positive amino-functionalized nanodiamond and water. That is, the suspension does not contain any additives that affects to the pH.

Base value of the zeta positive amino-functionalized nanodiamond particles as measured with titration is over 10, preferably over 15 and most preferably over 18.

Acidic value of the zeta positive amino-functionalized nanodiamond particles as measured with titration is less than 3, preferably less than 2 and most preferably less than 1.5.

Zeta potential of the zeta positive amino-functionalized nanodiamond particles, as suspended in water is over +30 mV, more preferably over +35 mV, even more preferably over +40 mV, and most preferably over +50 mV measured at pH higher than 7.

As suspended in water, zeta potential of the obtained zeta positive amino-functionalized nanodiamond particles is over +30 mV at a pH-range from 1.5 to 13, preferably at a pH-range from 2 to 11, and more preferably at a pH-range from 2 to 10.

The positive amino-functionalized nanodiamond particle surface may contain nitrogen from 500 to 5000mg/kg, preferably from 1000 to 3000 mg/kg, more preferably from 1400 to 2400 mg/kg. The measurement is conducted by Kjeldahl method. The measurement is calculated from sample dry weight.

Still the present disclosure provides a zeta positive amino-functionalized detonation nanodiamond dispersion comprising zeta positive amino-functionalized detonation nanodiamond particles and a liquid medium.

More particularly there is provided zeta positive amino-functionalized detonation nanodiamond dispersion comprising zeta positive amino-functionalized detonation nanodiamond particles and a liquid medium, wherein pH of the zeta positive amino-functionalized nanodiamond dispersion is at least 8.0 as measured at nanodiamond concentration of 5 wt.%, and wherein the zeta positive amino-functionalized nanodiamond particle concentration in the dispersion is at least 0.2 wt.%.

Preferably the pH of the zeta positive amino-functionalized nanodiamond dispersion is at least 8.5, preferably at least 9.0 and most preferably at least 10.0 as measured at 5 wt.% nanodiamond concentration. The pH is measured from dispersion comprising substantially only the zeta positive amino-functionalized nanodiamond and the liquid medium. That is, the dispersion does not contain any additives that affects to the pH.

Base value of the zeta positive amino-functionalized nanodiamond particles as measured with titration is over 10.0, preferably over 15 and most preferably over 18.

Acid value the zeta positive amino-functionalized nanodiamond particles as measured with titration is less than 3.0, preferably less than 2.0 and most preferably less than 1.5. The lower the acidic value is the higher is the positive zeta potential value, and therefore also the higher the dispersibility.

Zeta potential of the zeta positive amino-functionalized nanodiamond dispersion is over +30 mV, preferably +35 mV, more preferably over +40 mV, and most preferably over +50 mV measured at pH higher than 7.

The zeta potential of the zeta positive amino-functionalized nanodiamond dispersion may be over +40 mV, and preferably over +50 mV measured at pH lower than or 7.

Concentration of the zeta positive amino-functionalized nanodiamond particles in the dispersion is at least 0.2 wt%, preferably between 0.2 and 10 wt-%, and more preferably between 0.5 and 8 wt-%.

The liquid medium may be any suitable liquid medium. The liquid medium is preferably selected from the group consisting of polar protic solvents, polar aprotic solvents, dipolar aprotic solvents, aromatic solvents, chlorinated solvents, ionic liquids, or a mixture of any said mediums.

Preferred polar protic solvents are water; alcohols such as methanol, ethanol, iso-propanol, butanol, linear aliphatic diols such as ethylene glycol, 1,3-propanediol, 1,4-butanediol, 1,5-pentanediol, 1,8-octanediol; branched diols such as 1,2-propanediol, 1,3-butanediol, 2,3-butanediol, 1,3-butanediol, 1,2-pentanediol, etohexadiol, p-menthane-3,8-diol, 2-methyl-2,4-pentanediol; and carboxylic acids such as formic acid and acetic acid.

Preferred polar aprotic solvents are tetrahydrofuran, propylene carbonate and lactams such as N-methyl-2-pyrrolidone (NMP) and N-ethyl-2-pyrrolidone (NEP).

Preferred dipolar aprotic solvents are ketones such as acetone and methyl ethyl ketone (MEK), propylene glycol monomethyl ester acetone (PGMEA), esters such as methyl acetate, ethyl acetate, lactones such as gammabutyrolactone (GBL); N,N-methylformamide and dimethyl sulfoxide (DMSO).

Preferred aromatic solvents are toluene, xylenes and benzene.

Preferred chlorinated solvents are dichloromethane,trichloroethylene and chloroform.

Preferred ionic liquids are 1-ethyl-3-methylmidazolium chloride, 1-butyl-3-methylmidazolium chloride, 1-ethyl-3-methyl-imidazolium ethylsulfate, 1-ethyl-3-methyl imidazolium diethylphosphate, 1-ethyl-3-methyl-imidazolium dicyanamide, Tris-(2-hydroxyethyl)-methylammonium methylsulfate, 1-ethyl-3-methylimidazolium thiocyanate, 1-ethyl-3-methyl-imidazolium tetrafluoroborate, 1-ethyl-3-methyl-imidazolium trifluoromethanesulfonate, 1-ethyl-3-methyl-imidazolium bis (trifluoromethanesulfonyl)imide, 1-ethyl-3-methyl-imidazolium methylcarbonate and 1-butyl-3-methyl-imidazolium methylcarbonate, The most preferred ionic liquids are 1-ethyl-3-methylmidazolium chloride and 1-butyl-3-methylmidazolium chloride.

More preferably the liquid medium is selected from the group consisting of water, methanol, ethanol, iso-propanol, linear aliphatic diols, branched diols, N-methyl-2-pyrrolidone (NMP), N-ethyl-2-pyrrolidone (NEP) and dimethyl sulfoxide (DMSO), or a mixture of any said solvents.

Most preferably the liquid medium is water. The water may be deionized.

D90 average particle size distribution of the zeta positive amino-functionalized nanodiamond particles is preferably from 2 nm to 70 nm.

The purpose of the following examples is not to restrict the scope of the claims.

### Examples

### Apparatuses and materials

Ultrasonic device: Hielscher UP400S (from company Hielscher).

Beads mill device: Bühler PML2 (from company Bühler GmbH, Germany).

Particle size and zeta potential measurement tool: Malvern Zetasizer Nano ZS.

The XRD patterns were recorded between angles 5-45° (2Theta) by using Philips Powder X-Ray Diffractometer by using MoKα-radiation (Kα₁, 0.70932Å) with fixed divergence slit (size 0.8059°), but without incident beam monochromator. Power of radiation was 1575W.

The nanodiamond acid and base values were determined by titration. Every sample measurement was conducted twice, with a sample size of 1.5 g per titration. The titrations were carried out with automated Metrohm titrator.

Determination of acid functions: Solid samples were weighted accurately (1.5 g). The samples were dispersed into 75 ml of neutralized ethanol (water content 0.5 wt.%), using Hielscher 400 W ultrasonic unit. The prepared samples were titrated with 0.1 M KOH (in methanol), using phenoliftalene as an indicator. The samples were treated continuously with Argon gas flow during the titration. The titration end point was detected by using an indicator and with potentiometric means, using Methrohm Solvotrode electrode and drawing a titration curve.

Determination of base functions: Solid samples were weighted accurately (1.5 g). The samples were dispersed into 100 ml of acetic acid using Hielscher 400 W ultrasonic unit. The samples were titrated with 0.1 M perchloric acid (in acetic acid), using methyl violet as an indicator. 100 ml of acetic acid was used as a reference sample. The titration end point was featured with the indicator and/or with potentiometric means using Metrohm Solvotrode electrode and drawing a titration curve.

The product zeta potential values were measured of samples diluted to 0.1 wt%. The product particle size distributions were measured of samples diluted to 0.5 wt-%.

The product surface containing nitrogen was measured with Kjeldahl method, at Ahma Ympäristö Oy, Finland. The measurement is calculated from sample dry weight.

The solvent based nanodiamond dispersion moisture contents were determined by Karl Fischer method at Ketek Oy, Finland.

Furnace (reaction chamber):
- 6-zone horizontal tubular furnace (6zHTF):
   - 4 crucibles, 100ml loading in each, 99.7% Al₂O₃
   - Gas change in single step - for the first very careful pumping vacuum down to 10⁻¹ mbar and then introducing gas,
   - During treatment gas flow was 200 ml/min.

Nanodiamond powders:
- uDiamond^{®} Molto nanodiamond powder (commercially available from company Carbodeon), referred as nanodiamond powder A.
- Nanodiamond powder from Heyuan ZhongLian Nanotechnology Co., Ltd, referred as nanodiamond powder B.

Solvents:
N-Methyl-2-pyrrolidone (NMP), Assay ≥ 99,5 % was purchased from VWR Chemicals/Prolabo, Assay ≥ 99,5 %.
γ-Butyrolactone (GBL), Assay ≥ 99 % was purchased from Sigma Aldrich.
Ethylene glycol (EG), Normapur, Assay 99.9% was purchased from VWR Prolabo.

### Removal of acidic, oxygen bearing surface functions from nanodiamond powder A at 800 °C under argon gas

In this process commercially available nanodiamond powder A is treated with argon gas at 800°C for obtaining treated nanodiamond powder A, which is also available commercially from company Carbodeon with product name Molto Nuevo.

20.00 g, 20.00 g, 20.00 g and 20.00 g of nanodiamond powder A were loaded on alumina crucibles. Gas change was conducted in single step, first very careful pumping vacuum down to 10⁻¹ mbar and then introducing argon gas. The argon gas flow was adjusted to 200 ml/min. As reaching treatment temperature of 800°C, the samples were kept under said gas flow for 6 hours time, followed by gradual cooling of reaction furnace into room temperature, within 14 hours time. The powders were collected and combined. The combined sample was weighted and the yield was measured to 92.0%.

The sample (Molto Nuevo) was subjected to XRD analysis, and it was noted that the processing did not increase the graphitic carbon content and did not have any practical impact on nanodiamond crystal size (111). Results of the XRD analysis are shown on Table 1. The treated nanodiamond powder A is marked as Molto Nuevo.

The sample pH at 5 wt.% concentration was measured to 8.2. The sample titration gave an acid value of 0.4 and base value of 17.9. The starting material, nanodiamond powder A, acid value was measured to 13.7 and base value to 10.4.

The results clearly indicate effective removal of acidic, oxygen bearing surface functions and retained basic functions alike amino-functions on the nanodiamond surface. It is to be noted that solvent contained carbon dioxide can affect acid value measurement herein.

A 0.1 g sample of the obtained nanodiamond was mixed into 100 ml of deionized water, and the resulting mixture was subjected to ultrasonic treatment for one hour time. The resulting suspension zeta potential was measured to +42.0 mV.

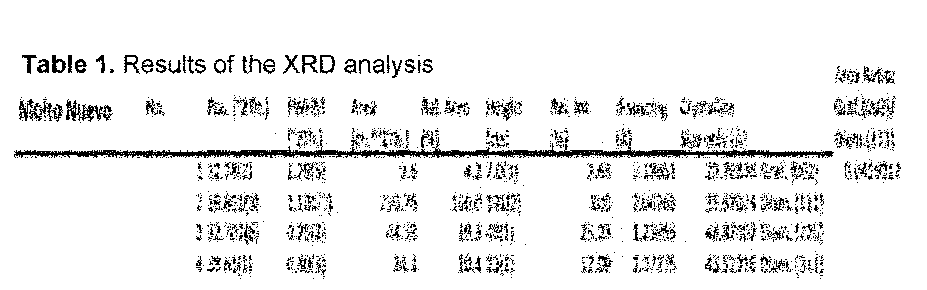

### Removal of acidic, oxygen bearing surface functions from nanodiamond powder B, at 600 °C under hydrogen and argon gas

In this process commercially available nanodiamond powder B is treated with hydrogen and argon gas at 800 °C for obtaining treated nanodiamond powder B.

20.00 g, 20.00 g, 20.00 g and 20.00 g of nanodiamond powder B were loaded on alumina crucibles,. Gas change was conducted in single step, for the first very careful pumping vacuum down to 10⁻¹ mbar and then introducing 4% hydrogen gas (99.9999%) in argon. The hydrogen containing argon gas flow was adjusted to 200 ml/min. As reaching treatment temperature of 600 °C, the samples were kept under said gas flow for 6 hours time, followed by gradual cooling of reaction furnace into room temperature, within 14 hours time. The resulting hydrogenated nanodiamond powder exhibits paler colour than untreated nanodiamond powder B. The powders were collected and combined. The combined sample was weighted and the yield was measured to 92.2%.

Both the sample and its starting material nanodiamond powder B were subjected to XRD analysis, and it was noted that the processing did not increase the graphitic carbon content and did not have any practical impact on nanodiamond crystal size (111). Results of the XRD analysis are shown on Table 2.

In the referred XRD-data (Table 2), untreated nanodiamond powder B is marked as Molto C, and treated nanodiamond powder B (the prepared sample) as Molto CH. The sample pH at 5 wt.% concentration was measured to 6.93. The sample titration gave an acid value of 1.2 and base value of 7.6. The nanodiamond powder B (untreated) acid value was determined to 3.5 and base value to 5.6. The results clearly indicate relatively effective removal of acidic, oxygen bearing surface functions and retained basic functions alike amino-functions on the nanodiamond surface. It is to be noted that solvent contained carbon dioxide can affect acid value measurement herein.

A 0.1 g sample of the hydrogenated nanodiamond was mixed into 100 ml of deionized water, and the resulting mixture was subjected to ultrasonic treatment for one hour time. The resulting suspension zeta potential was measured to +60.2 mV.

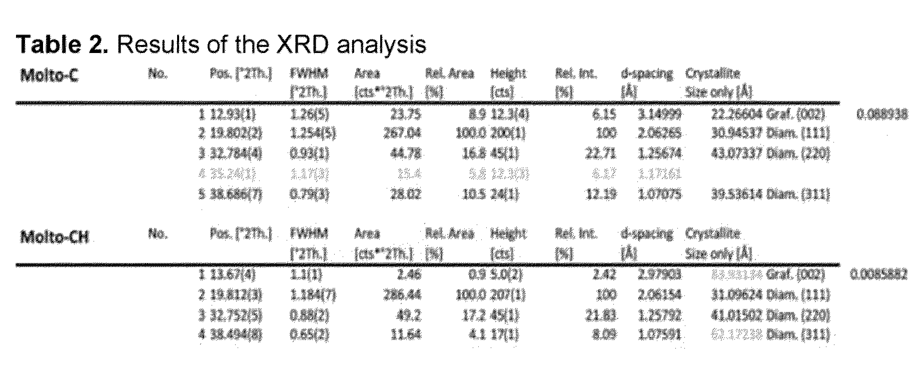

### Amino-functionalization of the treated nanodiamond powder A (prepared above) at 600 °C

37.35 g and 36.04 g of the treated nanodiamond powder A were loaded on alumina crucibles. Gas change was conducted in single step, for the first very careful pumping vacuum down to 10⁻¹ mbar and then introducing neat ammonia gas. The ammonia gas flow was adjusted to 200 ml/min. As reaching treatment temperature of 600°C, the samples were kept under said gas flow for 6 hours time, followed by gradual cooling of reaction furnace into room temperature, within 14 hours time. The powders (amino-functionalized nanodiamonds) were collected and combined. The combined sample was weighted and the yield was measured to 97.8%.

The sample (referred as Molto Nuevo-A) was subjected to XRD analysis. Results of the XRD analysis are shown on Table 3. It was noted that the processing did not increase the graphitic carbon content and did not have any practical impact on nanodiamond crystal size (111). The sample pH at 5 wt.% concentration was measured to 10.1. The sample titration gave an acid value of 1.0 and a base value of 20.9. It is to be noted that solvent contained carbon dioxide can affect acid value measurement herein. The results clearly demonstrate this method efficacy to introduce additional basic (amino-) surface functionalities into nanodiamond surface.

A 0.1 g sample of amino-functionalized nanodiamond was mixed into 100 ml of deionized water, and the resulting mixture was subjected to ultrasonic treatment for one hour time. The resulting suspension zeta potential was measured to +60.3 mV.

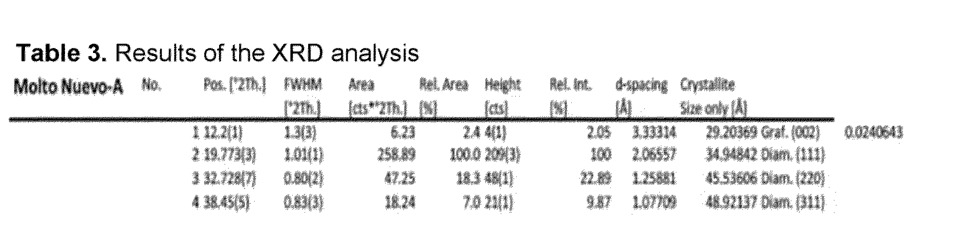

### Amino-functionalization of the treated nanodiamond powder A (prepared above) at 700 °C

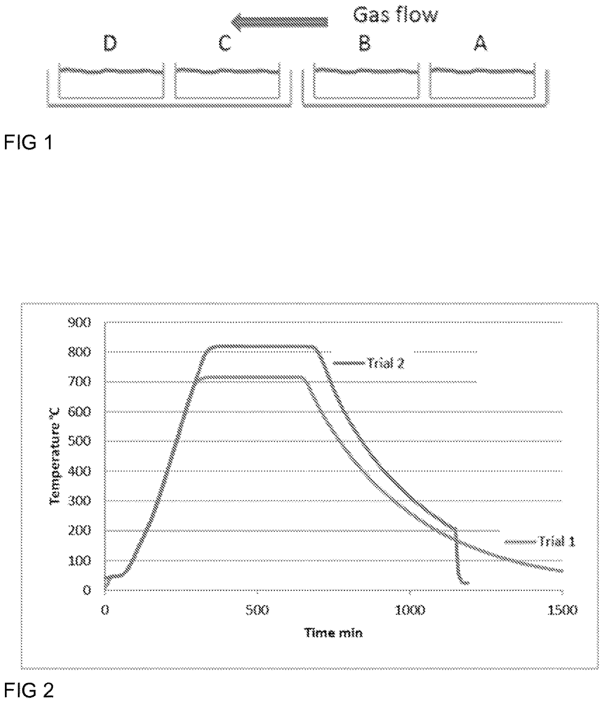

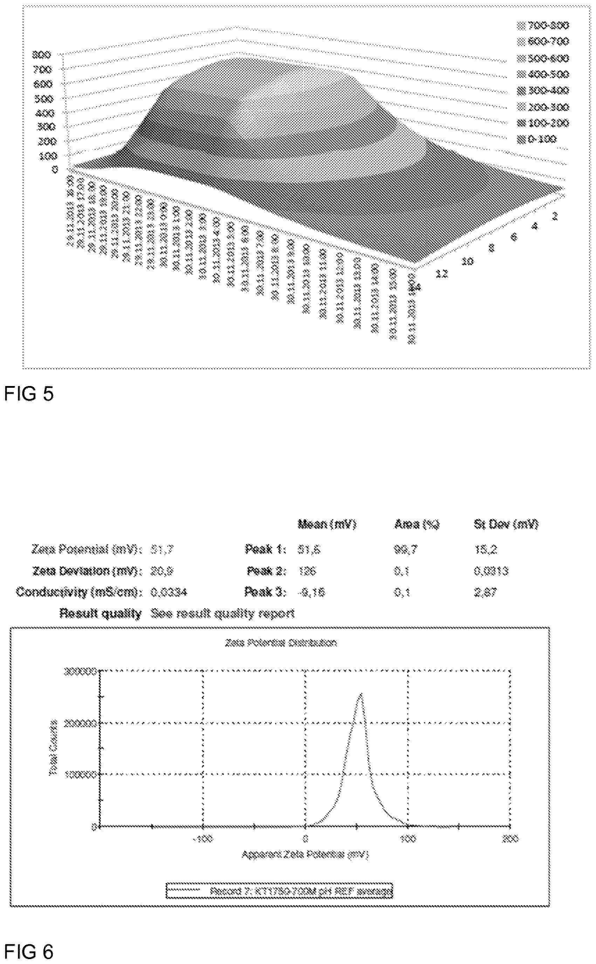

29.55 g, 28.93 g, 28.27 g and 13.08 g of the treated nanodiamond powder A were loaded on alumina crucibles. Gas change was conducted in single step, for the first very careful pumping vacuum down to 10⁻¹ mbar and then introducing neat ammonia gas. The ammonia gas flow was adjusted to 200 ml/min. In Figure 1 is presented sample positioning and gas flow direction in the furnace. As reaching treatment temperature of 700 °C, the samples were kept under said gas flow for 6 hours time, followed by gradual cooling of reaction furnace into room temperature, within 14 hours time. Figure 2 shows the temperature plot for the amino-functionalization process (trial 1). In Figure 5 is shown another temperature plot (distance between measurement points is (14 channels) 10 cm.)

The powders were collected and combined. The combined sample was weighted and the yield was measured to 98.1%. The sample was subjected to XRD analysis, and it was noted that the processing did not increase the graphitic carbon content and did not have any practical impact on nanodiamond crystal size (111). The sample pH at 5 wt.% concentration was measured to 10.6. The results clearly demonstrate this method efficacy to introduce additional basic (amino-) surface functionalities into nanodiamond surface.

A 0.1 g sample of amino-functionalized nanodiamond was mixed into 100 ml of deionized water, and the resulting mixture was subjected to ultrasonic treatment for one hour time. The resulting suspension zeta potential was measured to +63.5 mV.

The produced nanodiamond sample surface contained nitrogen was measured to 2180 mg/kg. The measurement was conducted by Kjeldahl method.

### Amino-functionalization of the treated nanodiamond powder A (prepared above) at 800 °C

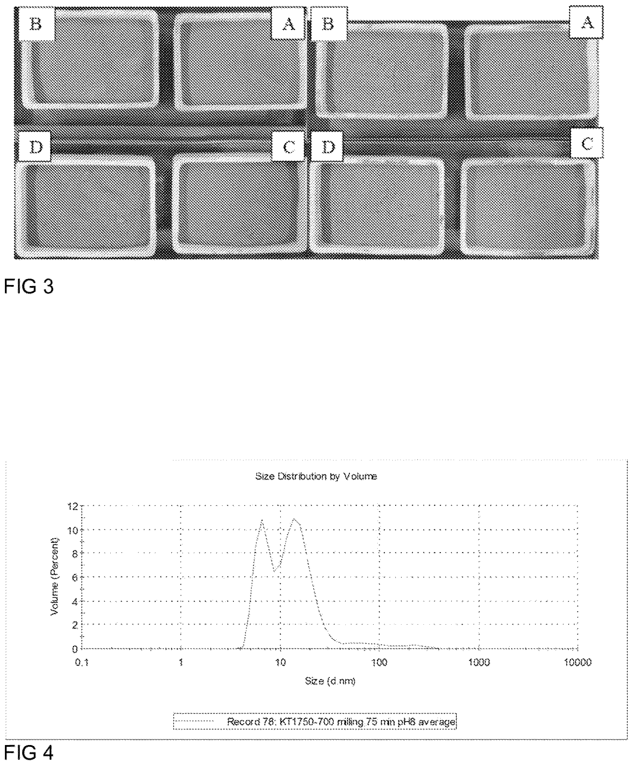

31.89 g, 29.92 g, 32.37 g and 31.37 g of the treated nanodiamond powder A were loaded on alumina crucibles. Gas change was conducted in single step, for the first very careful pumping vacuum down to 10⁻¹ mbar and then introducing neat ammonium gas. The ammonium gas flow was adjusted to 200 ml/min. As reaching treatment temperature of 800°C, the samples were kept under said gas flow for 6 hours time, followed by gradual cooling of reaction furnace into room temperature, within 14 hours time. Figure 2 shows the temperature plot for the amino-functionalization process (trial 2). The powders were collected and combined. The combined sample was weighted and the yield was measured to 97.6%. Figure 3 shows untreated nanodiamond powder A samples on the left side, and amino-functionalized nanodiamond samples prepared at 800 °C on the right hand side.

The sample was subject to XRD analysis, and it was noted that the processing did not increase the graphitic carbon content and did not have any practical impact on nanodiamond crystal size (111). The sample pH at 5 wt.% concentration was measured to 10.35. The results clearly demonstrate this method efficacy to introduce additional basic (amino-) surface functionalities into nanodiamond surface.

A 0.1 g sample of amino-functionalized nanodiamond was mixed into 100 ml of deionized water, and the resulting mixture was subjected to ultrasonic treatment for one- hour time. The resulting suspension zeta potential was measured to +53.4 mV.

The produced nanodiamond sample surface contained nitrogen was measured to 1530 mg/kg. The measurement was conducted by Kjeldahl method.

### Amino-functionalization of the treated nanodiamond powder B (prepared above) at 600°C

18.26 g of the treated nanodiamond powder B was loaded on an alumina crucible. Gas change was conducted in single step, for the first very careful pumping vacuum down to 10⁻¹ mbar and then introducing neat ammonium gas. The ammonium gas flow was adjusted to 200 ml/min. As reaching treatment temperature of 600 °C, the sample were kept under said gas flow for 6 hours time, followed by gradual cooling of reaction furnace into room temperature, within 14 hours time. The powder was collected and the sample (amino-functionalized nanodiamonds) was weighted and the yield was measured to 99.12%.

The sample (referred as Molto CHA) was subjected to XRD analysis. Results of the XRD analysis are shown on Table 4. It was noted that the processing did not increase the graphitic carbon content and did not have any practical impact on nanodiamond crystal size (111). The sample pH at 5 wt.% concentration was measured to 9.16. The results clearly demonstrate this method efficacy to introduce additional basic (amino-) surface functionalities into nanodiamond surface. The sample titration gave an acid value of 0.5 and a base value of 10.0. It is to be noted that solvent contained carbon dioxide can affect acid value measurement herein. The results clearly demonstrate this method efficacy to introduce additional basic (amino-) surface functionalities into nanodiamond surface.

A 0.1 g sample of amino-functionalized nanodiamond was mixed into 100 ml of deionized water, and the resulting mixture was subjected to ultrasonic treatment for one-hour time. The resulting suspension zeta potential was measured to +44.6 mV.

The produced nanodiamond sample surface contained nitrogen was measured to 1930 mg/kg. The measurement was conducted by Kjeldahl method.

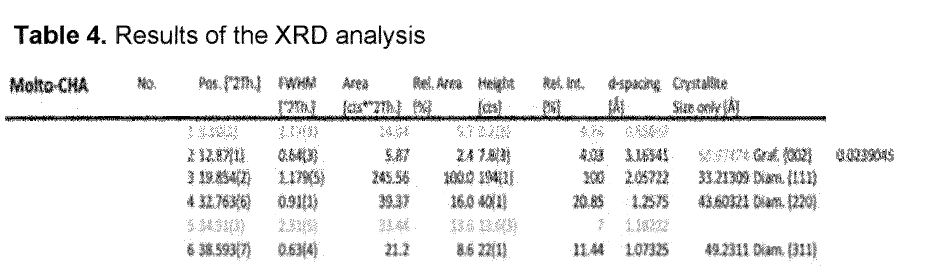

### Amino-functionalization of the treated nanodiamond powder A (prepared above) at 625 °C

40.0 g and 40.0 g of the treated nanodiamond powder A were loaded on alumina crucibles. Gas change was conducted in single step, for the first very careful pumping vacuum down to 10⁻¹ mbar and then introducing neat ammonia gas. The ammonia gas flow was adjusted to 200 ml/min. As reaching treatment temperature of 625°C, the samples were kept under said gas flow for 6 hours time, followed by gradual cooling of reaction furnace into room temperature, within 14 hours time. The powders (amino-functionalized nanodiamonds) were collected and combined. The combined sample was weighted and the yield was measured to 96.9%.

A 0.1 g sample of amino-functionalized nanodiamond was mixed into 100 ml of deionized water, and the resulting mixture was subjected to ultrasonic treatment for one hour time. The resulting suspension zeta potential was measured to +70.6 mV.

### Beads assisted sonic disintergration of the amino-functionalized nanodiamond powder A (amino-functionalized at 600 °C)

312.5 g of deionized water and 25.0 g of zeta positive amino-functionalized nanodiamond powder (prepared according to the above example at 600 °C) were mixed with a conventional magnetic stirrer to form a nanodiamond suspension. The suspension was subjected to ultrasonic treatment for 30 minutes, using H14 blade and 40% amplitude. The suspension was stirred with conventional magnetic stirrer (100 rpm), with simultaneous cooling with an ice-bath.

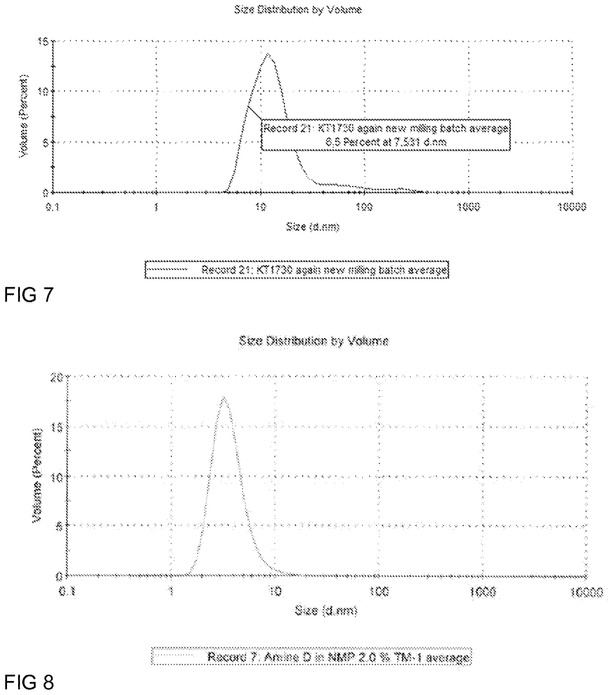

Said suspension was then subjected to beads assisted sonic disintergration, using 30 micron zirconia beads. The milling speed was adjusted to 3700 rpm, and after 20 minutes treatment time, the ultrasonic power was lowered to cycle 0.7 from 0.5. The rotation pump speed was maintained at 10% throughout the two hours processing time. As the mill had been pre-filled with 180 ml of water, a total volume of 500 ml of 5.0 wt.% highly zeta positive amino-dispersed nanodiamond dispersion was collected. The dispersion pH was measured to 8.5 and the zeta potential to +44.1 mV. The particle size distribution was the following: D10 7.25 nm; D50 12.3 nm and D90 26.8 nm (Figure 7).

### Beads assisted sonic disintergration of the amino-functionalized nanodiamond powder A (amino-functionalized at 700 °C)

312.5 g of deionized water and 25.0 g of zeta positive amino-functionalized nanodiamond powder (prepared according to the above example at 700°C) were mixed with a conventional magnetic stirrer to form a nanodiamond suspension. The suspension was subjected to ultrasonic treatment for 30 minutes, using H14 blade and 40% amplitude, and said suspension pH was adjusted to 8.0 by adding hydrochloric acid. The suspension was stirred with conventional magnetic stirrer (100 rpm), with simultaneous cooling with an ice-bath.

Said suspension was then subjected to beads assisted sonic disintergration, using 30 micron zirconia beads. The milling speed was adjusted to 3700 rpm, and after 20 minutes treatment time, the ultrasonic power was lowered to cycle 0.7 from 0.5. The rotation pump speed was maintained at 10% throughout the 75 minutes processing time. As the mill had been pre-filled with 180 ml of water, a total volume of 500 ml of 5.0 wt.% highly zeta positive amino-dispersed nanodiamond dispersion was collected. The dispersion pH was measured to 8.5 and the zeta potential to +51.7 mV (at 0.1 wt.% concentration), Figure 6. The particle size distribution was the following: D10 5.87 nm; D50 11.9 nm and D90 24.0 nm (Figure 4).

### Beads assisted sonic disintergration of the amino-functionalized nanodiamond powder A (amino-functionalized at 625°C)

236.0 g of deionized water and 14.0 g of zeta positive amino-functionalized nanodiamond powder (prepared according to the above example at 625 °C) were mixed with a conventional magnetic stirrer to form a nanodiamond suspension. Said suspension was subjected to ultrasonic treatment for 30 minutes, using H14 blade and 40% amplitude, and said suspension pH was adjusted to 7.95 by adding hydrochloric acid. The suspension was stirred with conventional magnetic stirrer (100 rpm), with simultaneous cooling with an ice-bath. Said suspension was then subjected to beads assisted sonic disintergration, using 30 micron zirconia beads. The milling speed was adjusted to 3700 rpm, and after 20 minutes treatment time, the ultrasonic power was lowered to cycle 0.7 from 0.5. The rotation pump speed was maintained at 10% throughout the 75 minutes processing time. As the mill had been pre-filled with 164 g of water, a total volume of 500 ml of 3.5 wt.% highly zeta positive amino-dispersed nanodiamond dispersion was collected. The dispersion pH was measured to 8.68 and the zeta potential to +44.0 mV (at 0.1 wt.% concentration). The particle size distribution was the following: D10 5.06 nm; D50 8.06 nm and D90 12.9 nm. The dispersion material prepared according to this protocol was applied for manufacturing the polar organic solvent based dispersions below.

### Example (according to the present invention) - Preparation of highly zeta positive 2.0 wt. % single digit aminated nanodiamond dispersion in NMP (N-Meth ylpyrrolidone)

The evaporator water bath was preheated up to 45 °C. 101 g of 0.991 wt.% aqueous highly zeta positive, amine functionalized nanodiamond dispersion was weighted into 500 ml round bottomed flask, followed by addition of 50 g of NMP solvent. The resulting mixture was allowed to stir for 5 minutes time. Then, the mixture was evaporated in the following sequences: 1000 mbar down to 100 mbar in 5 minutes, from 100 mbar down to 15-20 mbar in 10-15 min. Said steps were carried out without placing the flask into evaporator water bath. Thereafter, evaporation was continued by placing the flask into water bath (T=45 °C), rising the water bath temperature during 15 minutes to 80-85 °C. Then, the evaporation was continued until reaching the total evaporation time of 35 minutes.

The mass of the resulting dispersion was 44.74 g. In order to obtain 2.0 wt.% dispersion, 5.26 g of NMP was added to the dispersion. Resulting dispersion water content was measured to 0.53 wt.% by Karl Fischer titration.

The dispersion exhibited the following particle size distribution: D10: 2.26 nm; D50: 3.38 nm; D90: 5.57 nm. The particle size distribution curve of the prepared amine functionalized nanodiamond is illustrated in Figure 8. The dispersion zeta potential was +36.2 mv.

### Example (according to the present invention) - Preparation of highly zeta positive 2.0 wt. % single digit aminated nanodiamond dispersion in GBL (gammaButyrolactone)

The evaporator water bath was preheated up to 45 °C. 101 g of 0.991 wt.% aqueous highly zeta positive, amine functionalized nanodiamond dispersion was weighted into 500 ml round bottomed flask, followed by addition of 50 g of GBL solvent. The resulting mixture was allowed to stir for 5 minutes time. Then, the mixture was evaporated in the following sequences: 1000 mbar down to 100 mbar in 5 minutes, from 100 mbar down to 15-20 mbar in 10-15 min. Said steps were carried out without placing the flask into evaporator water bath. Thereafter, evaporation was continued by placing the flask into water bath (T=45 °C), rising the water bath temperature during 15 minutes to 80 °C. Then, the evaporation was continued until reaching the total evaporation time of 30 minutes.

The mass of the resulting dispersion was 43.6 g. In order to obtain 2.0 wt.% dispersion, 6.4 g of GBL was added to the dispersion. Resulting dispersion water content was measured to 0.06 wt.% by Karl Fischer titration.

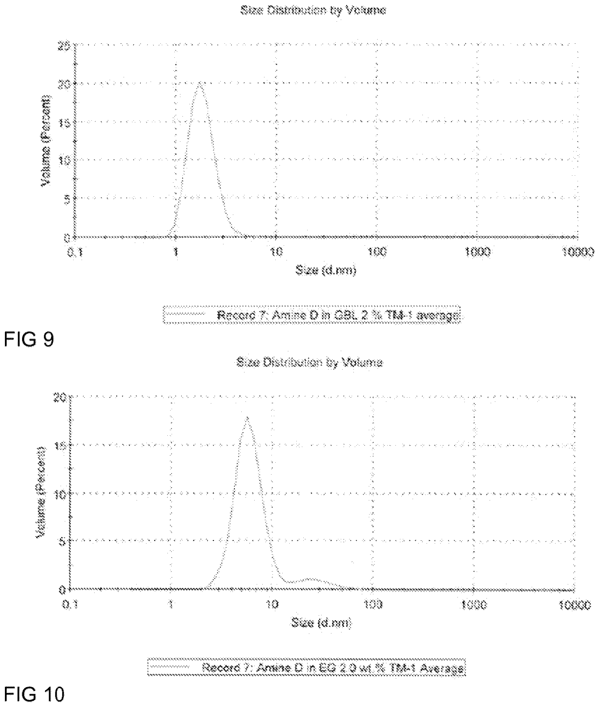

The dispersion exhibited the following particle size distribution: D10: 1.23 nm; D50: 1.78 nm; D90: 2.67 nm. The particle size distribution curve of the prepared amine functionalized nanodiamond is illustrated in Figure 9. The dispersion zeta potential was +68.9 mv.

### Example (according to the present invention) - Preparation of highly zeta positive 2.0 wt. % single digit aminated nanodiamond dispersion in EG (ethylene glycol)

The evaporator water bath was preheated up to 45 °C. 101 g of 0.991 wt.% aqueous highly zeta positive, amine functionalized nanodiamond dispersion was weighted into 500 ml round bottomed flask, followed by addition of 50 g of EG solvent. The resulting mixture was allowed to stir for 5 minutes time. Then, the mixture was evaporated in the following sequences: 1000 mbar down to 100 mbar in 5 minutes, from 100 mbar down to 15-20 mbar in 10-15 min. Said steps were carried out without placing the flask into evaporator water bath. Thereafter, evaporation was continued by placing the flask into water bath (T=45 °C), rising the water bath temperature during 15 minutes to 100 °C. Then, the evaporation was continued until reaching the total evaporation time of 40 minutes.

The mass of the resulting dispersion was 47,55 g. In order to obtain 2.0 wt.% dispersion, 2,45 g of EG was added to the dispersion. Resulting dispersion water content was measured to 0.08 wt.% by Karl Fischer titration.

The dispersion exhibited the following particle size distribution: D10: 3,87 nm; D50: 5,94 nm; D90: 11,3 nm. The particle size distribution curve of the prepared amine functionalized nanodiamond is illustrated in Figure 10.

## Claims

1. Zeta positive amino-functionalized detonation nanodiamond dispersion comprising zeta positive amino-functionalized detonation nanodiamond particles and a liquid medium, wherein pH of the zeta positive amino-functionalized detonation nanodiamond dispersion is at least preferably at least 9.0 as measured at nanodiamond concentration of 5 wt.%, and wherein the zeta positive amino-functionalized nanodiamond particle concentration in the dispersion is at least 0.2 wt.% and wherein zeta potential of the zeta positive amino-functionalized detonation nanodiamond dispersion is over +30 mV measured at pH-range 2 to 12, wherein zeta potential value is measured of samples diluted to 0.1 wt-%.

2. The zeta positive amino-functionalized nanodiamond dispersion according to claim 1, wherein zeta potential of the zeta positive amino-functionalized detonation nanodiamond dispersion is over +50 mV.

3. The zeta positive amino-functionalized nanodiamond dispersion according to claim 1 or 2, wherein the liquid medium is selected from the group consisting of polar protic solvents, polar aprotic solvents, dipolar aprotic solvents, aromatic solvents, chlorinated solvents, ionic liquids, or a mixture of the solvents.

4. The zeta positive amino-functionalized nanodiamond dispersion according to any one of claims 1 to 3, wherein D90 average particle size distribution of the zeta positive amino-functionalized detonation nanodiamond particles in the dispersion is from 2 nm to 70 nm.

## Patentansprüche

1. Zeta-positiv aminofunktionalisierte Detonations-Nanodiamantdispersion, umfassend zeta-positiv aminofunktionalisierte Detonations-Nanodiamantpartikel und ein flüssiges Medium, wobei der pH-Wert der zeta-positiv aminofunktionalisierten Detonations-Nanodiamantdispersion mindestens vorzugsweise mindestens 9,0 beträgt, gemessen bei einer Nanodiamantkonzentration von 5 Gew.-%, und wobei die Konzentration der zeta-positiv aminofunktionalisierten Nanodiamantpartikel in der Dispersion mindestens 0,2 Gew.-% beträgt, und wobei das Zetapotential der zeta-positiv aminofunktionalisierten Detonations-Nanodiamantdispersion über +30 mV liegt, gemessen bei einem pH-Bereich von 2 bis 12, wobei der Zetapotentialwert von auf 0,1 Gew.-% verdünnten Proben gemessen wird.

2. Zeta-positive aminofunktionalisierte Nanodiamantdispersion nach Anspruch 1, wobei das Zetapotential der zeta-positiven aminofunktionalisierten Detonations-Nanodiamantdispersion über +50 mV liegt.

3. Zetapositive aminofunktionalisierte Nanodiamantdispersion nach Anspruch 1 oder 2, wobei das flüssige Medium aus der Gruppe ausgewählt ist, die aus polaren protischen Lösungsmitteln, polaren aprotischen Lösungsmitteln, dipolaren aprotischen Lösungsmitteln, aromatischen Lösungsmitteln, chlorierten Lösungsmitteln, ionischen Flüssigkeiten oder einer Mischung der Lösungsmittel besteht.

4. Zeta-positive aminofunktionalisierte Nanodiamantdispersion nach einem der Ansprüche 1 bis 3, wobei die durchschnittliche D90-Partikelgrößenverteilung der zeta-positiven aminofunktionalisierten Detonations-Nanodiamantpartikel in der Dispersion zwischen 2 nm und 70 nm liegt.

## Revendications

1. Dispersion de nanodiamant de détonation à fonction amino à potentiel zêta positif comprenant des particules de nanodiamant de détonation à fonction amino à potentiel zêta positif et un milieu liquide, dans laquelle le pH de la dispersion de nanodiamant de détonation à fonction amino à potentiel zêta positif est au moins de préférence d'au moins 9,0 tel que mesuré à une concentration en nanodiamant de 5 % en poids, et dans laquelle la concentration en particules de nanodiamant à fonction amino à potentiel zêta positif dans la dispersion est d'au moins 0,2 % en poids et dans laquelle le potentiel zêta de la dispersion de nanodiamant de détonation à fonction amino à potentiel zêta positif est supérieur à +30 mV mesuré dans une plage de pH de 2 à 12, dans laquelle la valeur du potentiel zêta est mesurée à partir d'échantillons dilués à 0,1 % en poids.

2. Dispersion de nanodiamant à fonction amino à potentiel zêta positif selon la revendication 1, dans laquelle le potentiel zêta de la dispersion de nanodiamant de détonation à fonction amino à potentiel zêta positif est supérieur à +50 mV.

3. Dispersion de nanodiamant à fonction amino à potentiel zêta positif selon la revendication 1 ou 2, dans laquelle le milieu liquide est choisi dans le groupe constitué par des solvants protiques polaires, des solvants aprotiques polaires, des solvants aprotiques dipolaires, des solvants aromatiques, des solvants chlorés, des liquides ioniques ou un mélange des solvants.

4. Dispersion de nanodiamants à fonction amino à potentiel zêta positif selon l'une quelconque des revendications 1 à 3, dans laquelle la distribution granulométrique moyenne D90 des particules de nanodiamants de détonation à fonction amino à potentiel zêta positif dans la dispersion est de 2 nm à 70 nm.
